# EUROPÄISCHE PATENTSCHRIFT

(11) **EP 3 616 489 B1**
(45) Veröffentlichungstag und Bekanntmachung des Hinweises auf die Patenterteilung: **23.03.2022**
(21) Anmeldenummer: 19401030.2
(22) Anmeldetag: 22.08.2019
(51) Int. Cl.: A01C 17/00

(54) **VERFAHREN ZUM ERFASSEN VON DÜNGEREIGENSCHAFTEN**
METHOD FOR DETECTING FERTILISER PROPERTIES
PROCÉDÉ DE DÉTECTION DES PROPRIÉTÉS D'ENGRAIS

(30) Priorität: 28.08.2018 DE 102018120947
(43) Veröffentlichungstag der Anmeldung: 04.03.2020
(73) Patentinhaber: Amazonen-Werke H. Dreyer SE & Co. KG, 49205 Hasbergen (DE)
(72) Erfinder: Johannaber, Stefan Jan, 49536 Lienen (DE); Kleine-Hartlage, Hubertus, 49186 Bad Iburg (DE); Rahe, Florian, 49504 Lotte (DE); Albert, Jörn, 49080 Osnabrück (DE)

(56) Entgegenhaltungen:
- EP-A1- 3 017 678
- EP-A1- 3 087 817
- EP-A2- 2 924 417
- DE-A1-102014 116 022

## Beschreibung

Die Erfindung betrifft ein Verfahren zum Erfassen von Düngereigenschaften nach dem Oberbegriff des Patentanspruchs 1, ein Verfahren zum Ausbringen von Dünger nach dem Oberbegriff des Patentanspruchs 11 und eine Auswerteeinrichtung zum Erfassen von Düngereigenschaften nach dem Oberbegriff des Patentanspruchs 12.

Damit bei der Ausbringung von Dünger ein optimales Arbeitsergebnis erzielt werden kann, sind an dem verwendeten Streugerät vor oder während des Streuvorgangs geeignete Einstellparameter für den auszuführenden Ausbringvorgang einzustellen. Die einzustellenden Parameter sind dabei beispielsweise abhängig von der Arbeitsbreite, dem verwendeten Verteilscheibentyp und der auszubringenden Düngersorte.

In der Praxis ist es üblich, dass die Hersteller von Streugeräten düngersortenspezifische Einstellparameter im Rahmen von Streuversuchen unter Laborbedingungen ermitteln und die ermittelten Einstellparameter Benutzern von entsprechenden Streugeräten zur Verfügung stellen.

Die zur Ermittlung der düngersortenspezifischen Einstellparameter notwendigen Streuversuche bedingen dabei einen erheblichen zeitlichen und finanziellen Aufwand für die Hersteller der Streugeräte. Ferner ist zu berücksichtigen, dass die Eigenschaften einer Düngersorte sich im Laufe der Zeit verändern können, beispielsweise aufgrund einer Anpassung des Herstellungsvorgangs beim Düngerhersteller. Ferner können sich die Eigenschaften einer Düngersorte aufgrund von Umgebungsbedingungen während der Lagerung verändern. Beispielsweise kann eine Lagerung in feuchter Umgebung zu einer Erhöhung des spezifischen Gewichts des Düngers führen.

Durch die Änderung der Eigenschaften einer Düngersorte eignen sich die zuvor im Rahmen von Streuversuchen ermittelten düngersortenspezifischen Einstellparameter für Streugeräte nicht länger zur Erzielung von optimalen Streuergebnissen. Mit den unter Laborbedingungen ermittelten düngersortenspezifischen Einstellparametern kann somit die gewünschte Querverteilung und/oder die beabsichtigte Ausbringmenge nicht länger umgesetzt werden.

Um den zuvor beschriebenen Problemen zu begegnen, ist aus der Druckschrift EP 3 017 678 A1 ein Verfahren bekannt, bei welchem Streuversuche durch eine Echtzeitüberwachung während der Ausbringung ergänzt werden. Die DE 10 2014 116 022 A1 offenbart eine Echtzeitermittlung der Verteilung sowie der Wurfweite von ausgebrachtem Streugut.

Derartige Lösungen sind jedoch lediglich mit Streugeräten umsetzbar, welche eine Einrichtung zum Überwachen der Düngerausbringung aufweisen.

Die der Erfindung zugrundeliegende Aufgabe besteht somit darin, Veränderungen von Düngersorteneigenschaften derart feststellen zu können, dass entsprechende Erkenntnisse bei der Ausbringung mit Streugeräten ausgenutzt werden können, welche keine Einrichtung zum Überwachen der Düngerausbringung aufweisen.

Die Aufgabe wird gelöst durch ein Verfahren der eingangs genannten Art, bei welchem Ausbringinformationen zu einer Mehrzahl von unterschiedlichen Ausbringvorgängen einer Düngersorte von unterschiedlichen Sendern durch eine Auswerteeinrichtung empfangen und die von den unterschiedlichen Sendern empfangenen Ausbringinformationen zum Erfassen von Eigenschaften der Düngersorte durch die Auswerteeinrichtung ausgewertet werden.

Die Erfindung macht sich die Erkenntnis zunutze, dass durch die Bereitstellung von Ausbringinformationen zu einer Mehrzahl von unterschiedlichen Ausbringvorgängen einer Düngersorte eine Veränderung von Düngersorteneigenschaften festgestellt werden. Da die ausgewerteten Ausbringinformationen unterschiedlichen Ausbringvorgängen, insbesondere von unterschiedlichen Streugeräten, zugeordnet werden können, kann mit einer vergleichsweise hohen Sicherheit festgestellt werden, ob zuvor im Rahmen von Streuversuchen ermittelte düngersortenspezifische Einstellparameter zur Erzielung von optimalen Ausbringergebnissen noch geeignet sind. Beispielsweise kann durch das Auswerten der empfangenen Ausbringinformationen erfasst werden, ob die düngersortenspezifischen Einstellparameter, welche im Rahmen von Streuversuchen unter Laborbedingungen ermittelt wurden, noch zu der gewünschten Querverteilung und/oder der beabsichtigten Ausbringmenge und/oder Ausbringrate führen. Insbesondere, wenn sich die Zusammensetzung, die Korngröße, das Korngewicht, das Schüttgewicht, die Kornform, die Oberflächenbeschaffenheit und/oder die Feuchte der Düngersorte verändert hat, kann dies der Fall sein. Da die zuvor ermittelten düngersortenspezifischen Einstellparameter zu einer ungewünschten Querverteilung und/oder einer unbeabsichtigten Ausbringmenge und/oder Ausbringrate führen, kann es unbemerkt von dem Gerätebenutzer zu erheblichen Fehlausbringungen kommen.

Die Sender, welche der Auswerteeinrichtung die Ausbringinformationen zur Verfügung stellen, sind vorzugsweise Streugeräte oder mit einem jeweiligen Streugerät signalleitend verbundene Geräte oder Maschinen. Die Auswerteeinrichtung, welche die Ausbringinformationen empfängt und auswertet, kann beispielsweise Bestandteil eines zentralen Computersystems, insbesondere einer Servereinrichtung, sein. Die Auswerteeinrichtung kann dazu eingerichtet sein, die Düngereigenschaften von einer Vielzahl von unterschiedlichen Düngersorten zu erfassen.

In einer bevorzugten Ausführungsform des erfindungsgemäßen Verfahrens umfassen die Ausbringinformationen zu den jeweiligen Ausbringvorgängen Sorteninformationen, insbesondere eine Sortenbezeichnung, zu der ausgebrachten Düngersorte. Düngersorten unterscheiden sich aufgrund ihrer Eigenschaften beispielsweise in Bezug auf ihr Flug- und Fließverhalten. Damit die Auswertung düngersortenspezifisch erfolgen kann, ist es notwendig, dass der Auswerteeinrichtung entsprechende Sorteninformationen bereitgestellt werden, über welche die Auswerteeinrichtung die empfangenen Ausbringinformationen einer Düngersorte zuordnen kann.

In einer Weiterbildung des erfindungsgemäßen Verfahrens umfassen die Ausbringinformationen zu den jeweiligen Ausbringvorgängen Informationen zu der beabsichtigten und/oder der tatsächlichen Querverteilung und/oder dem beabsichtigten und/oder tatsächlichen Streu- oder Flugverhalten der Düngersorte während des jeweiligen Ausbringvorgangs. Die Informationen zu der beabsichtigten und/oder tatsächlichen Querverteilung und/oder dem beabsichtigten und/oder tatsächlichen Streu- oder Flugverhalten der Düngersorte während des jeweiligen Ausbringvorgangs können Informationen zu der beabsichtigten und/oder der tatsächlichen Arbeitsbreite, Informationen zu dem beabsichtigten und/oder tatsächlichen Abwurfwinkel der Düngersorte, Informationen zu dem beabsichtigten und/oder tatsächlichen Streufächer der Düngersorte und/oder Informationen zu der beabsichtigten und/oder tatsächlichen Wurfweite der Düngersorte während des jeweiligen Ausbringvorgangs umfassen. Wenn die Ausbringinformationen zu den jeweiligen Ausbringvorgängen zeigen, dass die tatsächliche Querverteilung von der beabsichtigten Querverteilung während des jeweiligen Ausbringvorgangs abweicht, kann daraus abgeleitet werden, dass die Eigenschaften der Düngersorte sich verändert haben. Mit den im Rahmen von Streuversuchen ermittelten Einstellparametern ist somit eine gewünschte Querverteilung nicht mehr erreichbar.

In einer anderen Ausführungsform des erfindungsgemäßen Verfahrens umfassen die Ausbringinformationen zu den jeweiligen Ausbringvorgängen Informationen zu der beabsichtigten und/oder der tatsächlichen Längsverteilung und/oder der tatsächlichen Ausbringmenge und/oder Ausbringrate und/oder der beabsichtigten und/oder tatsächlichen geräteinternen Durchflussmenge der Düngersorte während des jeweiligen Ausbringvorgangs. Wenn die Ausbringinformationen zeigen, dass die tatsächliche Längsverteilung von der beabsichtigten Längsverteilung abweicht, kann daraus abgeleitet werden, dass die Eigenschaften der Düngersorte sich verändert haben. Mit den unter Laborbedingungen ermittelten Einstellparametern ist eine gewünschte Längsverteilung somit nicht mehr erzielbar. Wenn die tatsächliche Ausbringmenge und/oder Ausbringrate von der beabsichtigten Ausbringmenge und/oder Ausbringrate abweicht, kann daraus beispielsweise abgeleitet werden, dass sich das Fließverhalten der Düngersorte verändert hat. Mit den im Rahmen von Streuversuchen ermittelten Einstellparametern ist eine beabsichtigte Ausbringmenge und/oder Ausbringrate und/oder die Realisierung einer beabsichtigten geräteinternen Durchflussmenge der Düngersorte nicht länger erzielbar.

Ferner ist ein erfindungsgemäßes Verfahren vorteilhaft, bei welchem die Ausbringinformationen zu den jeweiligen Ausbringvorgängen Informationen zu einem oder zu mehreren veränderbaren Einstellparametern des jeweiligen Streugeräts während des jeweiligen Ausbringvorgangs umfassen. Der eine oder die mehreren veränderbaren Einstellparameter können die Scheibendrehzahl, den Aufgabepunkt und/oder Scheibeneinstellungen betreffen. Die Scheibendrehzahl beeinflusst die in den Dünger eingebrachte kinetische Energie und somit die Wurfweite des Düngers. Der Aufgabepunkt beeinflusst die Verweildauer des Düngers auf der Verteilscheibe und somit die Wurfrichtung des Düngers. Der eine oder die mehreren veränderbaren Einstellparameter können die Öffnungsgröße und/oder die Öffnungsform bzw. -kontur einer Dosieröffnung eines Streugeräts betreffen. Der eine oder die mehreren veränderbaren Einstellparameter können einen eine Durchflussmengeneinstellung repräsentierenden Kalibrierfaktor betreffen.

Mittels der veränderbaren Einstellparameter, wie etwa der Scheibendrehzahl oder dem Aufgabepunkt, lässt sich beispielsweise die Querverteilung, insbesondere die Wurfrichtung und die Wurfweite, beeinflussen. Damit eine geeignete Beeinflussung der Querverteilung zur Verbesserung des Streuergebnisses umgesetzt werden kann, ist das Erfassen und Aufzeichnen der Querverteilung, insbesondere der Wurfrichtung und der Wurfweite, notwendig. Dies kann beispielsweise mittels einem oder mehreren optischen Sensoren und/oder mittels einem oder mehreren Radarsensoren des jeweiligen Streugeräts erfolgen. Über die Wurfrichtung und die Wurfweite lässt sich somit auch die Arbeitsbreite während des Ausbringvorgangs anpassen.

Das erfindungsgemäße Verfahren wird ferner dadurch vorteilhaft weitergebildet, dass die Ausbringinformation zu den jeweiligen Ausbringvorgängen Informationen zu dem Modell und/oder der Gerätekonfiguration des jeweiligen Streugeräts während des jeweiligen Ausbringvorgangs umfassen. Die Informationen zu der Gerätekonfiguration können Informationen zu den verwendeten Verteilscheiben, insbesondere dem Scheibentyp, umfassen. Die Information zu der Gerätekonfiguration können Informationen zu dem Streuguteinleitsystem und/oder Informationen zu dem Dosiersystem umfassen.

In einer weiteren Ausführungsform des erfindungsgemäßen Verfahrens wird ein oder werden mehrere geeignete Einstellparameter für ein Streugerät zum Ausbringen der Düngersorte auf Grundlage der erfassten Eigenschaften der Düngersorte durch die Auswerteeinrichtung ermittelt. Der eine oder die mehreren zu ermittelnden geeigneten Einstellparameter können die Scheibendrehzahl, den Aufgabepunkt und/oder Scheibeneinstellungen betreffen. Der eine oder die mehreren zu ermittelnden geeigneten Einstellparameter können die Öffnungsgröße und/oder die Öffnungsform bzw. -kontur einer Dosieröffnung betreffen. Der eine oder die mehreren zu ermittelnden geeigneten Einstellparameter können einen eine Durchflussmengeneinstellung repräsentierenden Kalibrierfaktor betreffen. Das Verfahren kann ferner das Vergleichen des einen oder der mehreren ermittelten geeigneten Einstellparameter für das Streugerät zum Ausbringen der Düngersorte mit einem oder mehreren Einstellparametern, welche auf Grundlage der erfassten Eigenschaften der Düngersorte zu einem früheren Zeitpunkt durch die Auswerteeinrichtung ermittelt wurden, umfassen. Der eine oder die mehreren ermittelten geeigneten Einstellparameter sind somit stets auf die aktuellen Eigenschaften der Düngersorte abgestimmt. Das Verfahren kann ferner das Vergleichen des einen oder der mehreren ermittelten geeigneten Einstellparameter für das Streugerät zum Ausbringen der Düngersorte mit einem oder mehreren Einstellparametern, welche zuvor im Rahmen von Streuversuchen, insbesondere unter Laborbedingungen, für die Düngersorte ermittelt wurden, umfassen. Auf diese Weise kann geprüft werden, ob die im Rahmen von Streuversuchen ermittelten Einstellparameter zur Ausbringung der jeweiligen Düngersorte noch geeignet sind bzw. welche Ausbringpräzision die im Rahmen von Streuversuchen ermittelten Einstellparameter noch liefern. Durch die große Menge von ausgewerteten Ausbringinformationen lassen die ermittelten geeigneten Einstellparameter eine vergleichsweise präzise Umsetzung der beabsichtigten Querverteilung zu. Ferner lassen die ermittelten geeigneten Einstellparameter aufgrund der großen Menge von ausgewerteten Ausbringinformationen eine vergleichsweise präzise Einhaltung der beabsichtigten Ausbringmenge und/oder Ausbringrate zu. Abhängig von dem Vergleichsergebnis mit den Einstellparametern, welche zuvor im Rahmen von Streuversuchen für die Düngersorte ermittelt wurden, können auch neue Streuversuche, insbesondere unter Laborbedingungen, durchgeführt werden.

Ferner wird das erfindungsgemäße Verfahren dadurch vorteilhaft weitergebildet, dass die ermittelten geeigneten Einstellparameter für das Streugerät zum Ausbringen der Düngersorte bereitgestellt werden. Durch das Bereitstellen der ermittelten geeigneten Einstellparameter profitieren insbesondere Streugeräte, welche über keine Einrichtung zum Überwachen der Düngerausbringung verfügen. Derartige Geräte sind nicht in der Lage, die Düngerausbringung aufgrund von selbsterfassten Informationen anzupassen. Durch das Bereitstellen der ermittelten geeigneten Einstellparameter können derartige Geräte Informationen nutzen, welche durch andere im Einsatz befindliche Geräte, welche über eine entsprechende Einrichtung zum Überwachen der Düngerausbringung verfügen, aufgezeichnet und der Auswerteeinrichtung zur Verfügung gestellt wurden.

In einer vorteilhaften Weiterbildung des erfindungsgemäßen Verfahrens umfasst das Bereitstellen der ermittelten geeigneten Einstellparameter für das Streugerät zum Ausbringen der Düngersorte das Erstellen einer neuen Streutabelle für die Düngersorte, wobei aus der neuen Streutabelle die ermittelten geeigneten Einstellparameter für das Streugerät zum Ausbringen der Düngersorte entnehmbar sind. Somit ist es nicht notwendig, dass das Streugerät über eine entsprechende Empfangseinrichtung zum Empfang der ermittelten geeigneten Einstellparameter verfügt. Auf Grundlage der neuen Streutabelle kann der Benutzer die ermittelten geeigneten Einstellparameter auch manuell einstellen. Das Bereitstellen der ermittelten geeigneten Einstellparameter für das Streugerät zum Ausbringen der Düngersorte kann ferner das Aktualisieren einer Streutabelle für die Düngersorte umfassen, wobei aus der aktualisierten Streutabelle die ermittelten geeigneten Einstellparameter für das Streugerät zum Ausbringen der Düngersorte entnehmbar sind. Insbesondere handelt es sich bei der aktualisierbaren Streutabelle um eine digitale Streutabelle, welche über elektronische Geräte, wie beispielsweise Computer oder mobile Endgeräte, aufgerufen bzw. abgerufen werden kann. Das Bereitstellen der ermittelten geeigneten Einstellparameter für das Streugerät zum Ausbringen der Düngersorte kann auch das Bereitstellen der ermittelten geeigneten Einstellparameter für das Streugerät zum Ausbringen der Düngersorte zum Onlineabruf umfassen. Der Onlineabruf kann durch mobile Endgeräte erfolgen, sodass der Benutzer die aktuellen geeigneten Einstellparameter unmittelbar vor dem Ausbringvorgang abrufen kann. Der Onlineabruf kann direkt durch andere Streugeräte erfolgen, welche dazu eingerichtet sind, selbsttätig die abgerufenen geeigneten Einstellparameter einzustellen, beispielsweise vor oder während des Ausbringvorgangs.

Das erfindungsgemäße Verfahren sieht ferner vor, dass Ausbringinformationen zu einer Mehrzahl von Ausbringvorgängen einer Düngersorte durch unterschiedliche Streugeräte erfasst und/oder aufgezeichnet werden. Ferner werden die erfassten und/oder aufgezeichneten Ausbringinformationen von den jeweiligen Streugeräten an die Auswerteeinrichtung gesendet. Die Ausbringvorgänge erfolgen vorzugsweise an unterschiedlichen Orten und/oder zu unterschiedlichen Zeiten. Die unterschiedlichen Streugeräte entsprechen vorzugsweise den unterschiedlichen Sendern, von welchen die Ausbringeinrichtung die Ausbringinformationen empfängt.

In einer Weiterbildung des erfindungsgemäßen Verfahrens umfasst das Erfassen und/oder Aufzeichnen von Ausbringinformationen zu den jeweiligen Ausbringvorgängen der Düngersorte das Erfassen, insbesondere das kontinuierliche Erfassen, der Querverteilung und/oder des Streu- und/oder Flugverhaltens der Düngersorte des jeweiligen Streugeräts während des Ausbringvorgangs der Düngersorte. Das Streu- und/oder Flugverhalten des Düngers wird vorzugsweise durch eine Messung eines Abwurfwinkels oder einer Wurfrichtung und/oder durch die Messung einer Flugweite oder Wurfweite des Düngers bestimmt.

Im Sinne der Erfindung kann unter einem kontinuierlichen Erfassen sowohl ein ununterbrochenes Erfassen als auch ein periodisches Erfassen verstanden werden.

Außerdem ist ein erfindungsgemäßes Verfahren bevorzugt, bei welchem das Erfassen und/oder Aufzeichnen von Ausbringinformationen zu den jeweiligen Ausbringvorgängen der Düngersorte das Erfassen, insbesondere das kontinuierliche Erfassen, von Eigenschaften zumindest eines Streufächers des jeweiligen Streugeräts während des Ausbringvorgangs der Düngersorte umfasst. Das Erfassen, insbesondere das kontinuierliche Erfassen, von Eigenschaften des zumindest einen Streufächers erfolgt vorzugsweise mittels einem oder mehreren optischen Sensoren und/oder mittels einem oder mehreren Radarsensoren des jeweiligen Streugeräts, wobei die Sensoren an einem Düngervorratsbehälter des Streugeräts angeordnet und/oder befestigt sein können. Mittels des einen oder der mehreren optischen Sensoren oder Radarsensoren werden vorzugsweise die Informationen zu der tatsächlichen Querverteilung der Düngersorte während des jeweiligen Ausbringvorgangs ermittelt.

In einer anderen Ausführungsform des erfindungsgemäßen Verfahrens umfasst das Erfassen und/oder Aufzeichnen von Ausbringinformationen zu den jeweiligen Ausbringvorgängen der Düngersorte das Erfassen, insbesondere das kontinuierliche Erfassen, des Gewichts eines Vorratsbehälters für Streugut des jeweiligen Streugeräts während des Ausbringvorgangs der Düngersorte, und/oder das Erfassen, insbesondere das kontinuierliche Erfassen, der Öffnungsgröße einer Dosieröffnung des jeweiligen Streugeräts während des Ausbringvorgangs der Düngersorte. Alternativ oder zusätzlich umfasst das Erfassen und/oder Aufzeichnen von Ausbringinformationen zu den jeweiligen Ausbringvorgängen der Düngersorte das Erfassen, insbesondere das kontinuierliche Erfassen, des Verhältnisses zwischen dem Gewicht des Vorratsbehälters und der Öffnungsgröße der Dosieröffnung während des Ausbringvorgangs der Düngersorte. Durch das kontinuierliche Erfassen des Gewichts des Vorratsbehälters für Streugut kann eine entsprechende Gewichtsveränderung des Vorratsbehälters für Streugut erfasst werden. Durch das Erfassen des Verhältnisses zwischen dem Gewicht oder der Gewichtsveränderung des Vorratsbehälters und der Öffnungsgröße bzw. der Öffnungsgrößenveränderung der Dosieröffnung lässt sich das Fließverhalten der Düngersorte ableiten. Aus einem geänderten Fließverhalten der Düngersorte würde eine Ausbringmengenveränderung und/oder Ausbringratenveränderung resultieren. Durch das Erfassen des Verhältnisses zwischen dem Gewicht bzw. der Gewichtsänderung des Vorratsbehälters und der Öffnungsgröße bzw. der Öffnungsgrößenänderung der Dosieröffnung lässt sich somit feststellen, ob mit zuvor ermittelten Einstellparametern weiterhin die beabsichtigte Menge und/oder Rate der Düngersorte ausbringbar ist. Das Erfassen, insbesondere das kontinuierliche Erfassen, des Gewichts des Vorratsbehälters für Streugut erfolgt vorzugsweise über einen Wiegevorgang, insbesondere mittels eines mit dem Vorratsbehälter für Streugut gekoppelten Wiegesystems.

In einer anderen Ausführungsform des erfindungsgemäßen Verfahrens umfasst das Erfassen und/oder Aufzeichnen von Ausbringinformationen zu den jeweiligen Ausbringvorgängen der Düngersorte das Erfassen, insbesondere das kontinuierliche Erfassen, des Drehmoments an zumindest einer Verteilscheibe für Streugut des jeweiligen Streugeräts während des Ausbringvorgangs der Düngersorte, und/oder das Erfassen, insbesondere das kontinuierliche Erfassen, der Öffnungsgröße einer Dosieröffnung des jeweiligen Streugeräts während des Ausbringvorgangs der Düngersorte. Alternativ oder zusätzlich umfasst das Erfassen und/oder Aufzeichnen von Ausbringinformationen zu den jeweiligen Ausbringvorgängen der Düngersorte das Erfassen, insbesondere das kontinuierliche Erfassen, des Verhältnisses zwischen dem Drehmoment an der zumindest einen Verteilscheibe und der Öffnungsgröße der Dosieröffnung während des Ausbringvorgangs der Düngersorte. Das Erfassen, insbesondere das kontinuierliche Erfassen des Drehmoments an der zumindest einen Verteilscheibe für Streugut erfolgt vorzugsweise über eine direkte Momentenerfassung oder eine indirekte Momentenerfassung, beispielsweise über eine Strom- und/oder Spannungserfassung, wenn die zumindest eine Verteilscheibe elektrisch angetrieben wird. Aus dem Drehmoment an der zumindest einen Verteilscheibe kann auf das Gewicht des aufgegebenen Düngers geschlossen werden.

In einer vorteilhaften Weiterbildung des erfindungsgemäßen Verfahrens umfasst das Erfassen und/oder Aufzeichnen von Ausbringinformationen zu den jeweiligen Ausbringvorgängen der Düngersorte das Bereitstellen einer Eingabemöglichkeit für einen Benutzer, welcher es dem Benutzer erlaubt, Sorteninformationen, insbesondere eine Sortenbezeichnung, zu der auszubringenden oder der ausgebrachten Düngersorte bereitzustellen. Vorzugsweise umfasst die Eingabemöglichkeit eine Auswahlmöglichkeit, mittels welcher der Benutzer die auszubringende oder die ausgebrachte Düngersorte aus einer Liste auswählen kann. Das Bereitstellen der Eingabemöglichkeit für einen Benutzer erfolgt vorzugsweise durch das Bereitstellen einer Eingabeeinrichtung, insbesondere einer druck- und/oder berührungssensitiven Eingabeeinrichtung. Die Eingabeeinrichtung kann beispielsweise als Touchscreen ausgebildet sein und/oder einen oder mehrere Knöpfe und/oder Tasten umfassen.

In einer Weiterbildung des erfindungsgemäßen Verfahrens erfolgt das Senden der erfassten und/oder aufgezeichneten Ausbringinformationen von den jeweiligen Streugeräten an die Auswerteeinrichtung zumindest teilweise kabellos, insbesondere über Funk. Das Senden erfolgt besonders bevorzugt unter Verwendung von Mobilfunk. Vorzugsweise weist das Streugerät oder ein mit dem Streugerät signalleitend verbundenes Gerät ein Sendemodul auf, welches die kabellose Datenübertragung, insbesondere über Funk, erlaubt. Vorzugsweise weist die Auswerteeinrichtung eine Empfangseinrichtung und/oder eine Sendeeinrichtung auf, welche das kabellose Senden bzw. Empfangen, insbesondere über Funk, erlauben.

Die der Erfindung zugrundeliegende Aufgabe wird ferner durch ein Verfahren zum Ausbringen von Dünger gelöst, wobei das erfindungsgemäße Verfahren das Abrufen des einen oder der mehreren geeigneten Einstellparameter für das Streugerät zum Ausbringen der Düngersorte, insbesondere durch einen Onlineabruf, umfasst, wobei der eine oder die mehreren geeigneten Einstellparameter für das Streugerät zum Ausbringen der Düngersorte unter Anwendung des Verfahrens zum Erfassen von Düngereigenschaften nach einer der vorstehend beschriebenen Ausführungsformen ermittelt wurden.

Das erfindungsgemäße Verfahren zum Ausbringen von Dünger erlaubt es Streugeräte, welche über keine Einrichtung zum Überwachen der Düngerausbringung verfügen, Daten zu nutzen, welche von Streugeräten erfasst und/oder aufgezeichnet wurden, welche über eine entsprechende Einrichtung zum Überwachen der Düngerausbringung verfügen. Das Verfahren kann das akustische oder optische Wiedergeben eines Hinweises durch eine Wiedergabeeinrichtung des Streugeräts und/oder durch ein mobiles Endgerät umfassen, mit welchem ein Benutzer darüber informiert wird, dass aktualisierte Einstellparameter für das Streugerät zum Ausbringen der Düngersorte vorliegen.

Die der Erfindung zugrundeliegende Aufgabe wird ferner durch eine Auswerteeinrichtung zum Erfassen von Düngereigenschaften der eingangs genannten Art gelöst, wobei die erfindungsgemäße Auswerteeinrichtung eine Empfangseinrichtung und eine Berechnungseinrichtung umfasst. Die Empfangseinrichtung ist dazu eingerichtet, Ausbringinformationen zu einer Mehrzahl von unterschiedlichen Ausbringvorgängen einer Düngersorte von unterschiedlichen als Streugeräte ausgebildeten Sendern zu empfangen. Die Berechnungseinrichtung ist dazu eingerichtet, die von den unterschiedlichen als Streugeräte ausgebildeten Sendern empfangenen Ausbringinformationen zum Erfassen von Eigenschaften der Düngersorte auszuwerten. Die Auswerteeinrichtung ist vorzugsweise als Bestandteil eines zentralen Computersystems, beispielsweise einer Servereinrichtung, ausgebildet. Die erfindungsgemäße Auswerteeinrichtung wird ferner dadurch vorteilhaft weitergebildet, dass die Berechnungseinrichtung dazu eingerichtet ist, einen oder mehrere geeignete Einstellparameter für ein Streugerät zum Ausbringen der Düngersorte auf Grundlage der erfassten Eigenschaften der Düngersorte zu ermitteln. Vorzugsweise ist die Auswerteeinrichtung dazu eingerichtet, den einen oder die mehreren geeigneten Einstellparameter bereitzustellen und/oder zu versenden.

In einer Weiterbildung der erfindungsgemäßen Auswerteeinrichtung ist diese dazu eingerichtet, in einem Verfahren zum Erfassen von Düngereigenschaften nach einer der vorstehend beschriebenen Ausführungsformen verwendet zu werden. Hinsichtlich der Vorteile und Modifikationen einer entsprechenden Auswerteeinrichtung wird auf die Vorteile und Modifikationen des erfindungsgemäßen Verfahrens zum Erfassen von Düngereigenschaften verwiesen.

Die erfindungsgemäße Auswerteeinrichtung kann beispielsweise in einem System eingesetzt werden, welches neben der Auswerteeinrichtung eine Mehrzahl von Streugeräten umfasst. Die jeweiligen Streugeräte können dabei eine Einrichtung zum Überwachen der Düngerausbringung umfassen, welche dazu eingerichtet ist, die Düngerausbringung, insbesondere die Eigenschaften zumindest eines Streufächers des jeweiligen Streugeräts, das Gewicht eines Vorratsbehälters für Streugut des jeweiligen Streugeräts, das Drehmoment an zumindest einer Verteilscheibe für Streugut des jeweiligen Streugeräts, und/oder die Öffnungsgröße einer Dosieröffnung des jeweiligen Streugeräts während des Ausbringvorgangs der Düngersorte zu erfassen. Die jeweiligen Streugeräte können außerdem ein Sendemodul umfassen, welches dazu eingerichtet ist, die erfassten Informationen zu den eigenen Geräteeinstellungen und/oder der eigenen Gerätekonfiguration während des Ausbringvorgangs der Düngerseite an die Auswerteeinrichtung zu senden. Ferner können die jeweiligen Streugeräte eine Abrufeinrichtung aufweisen, welche dazu eingerichtet ist, einen oder mehrere geeignete Einstellparameter für das Streugerät zum Ausbringen der Düngersorte, insbesondere durch einen Onlineabruf, abzurufen. Außerdem können die jeweiligen Streugeräte eine Einstelleinrichtung umfassen, welche dazu eingerichtet ist, den einen oder die mehreren abgerufenen geeigneten Einstellparameter selbsttätig einzustellen.

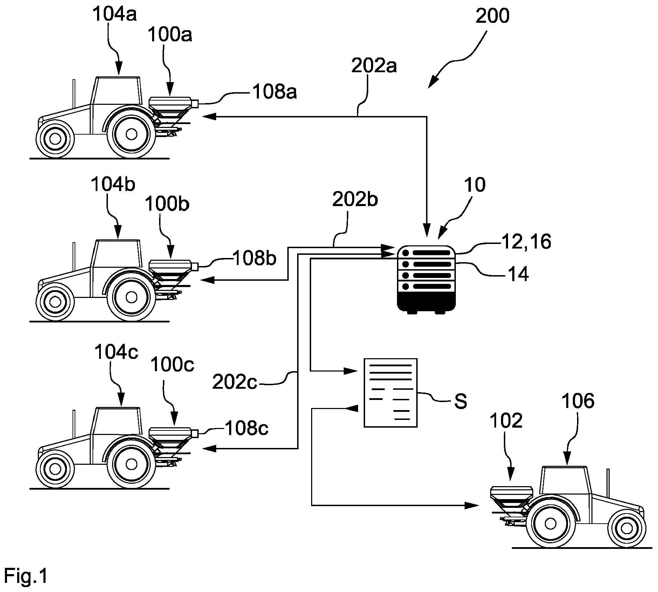

Nachfolgend wird eine bevorzugte Ausführungsform der Erfindung unter Bezugnahme auf die beiliegende Zeichnung näher erläutert und beschrieben. Dabei zeigt die Figur:
Ein Ausführungsbeispiel der erfindungsgemäßen Auswerteeinrichtung während des Ausführens des erfindungsgemäßen Verfahrens.

Die Figur zeigt ein System 200 mit mehreren als Düngerstreuer ausgebildeten Streugeräten 100a-100c, 102 und einer Auswerteeinrichtung 10, welche als Bestandteil eines zentralen Computersystems ausgebildet ist.

Die Streugeräte 100a-100c werden von als Traktor ausgebildeten Fahrzeugen 104a-104c getragen und weisen jeweils eine Einrichtung 108a-108c zum Überwachen der Düngerausbringung auf. Mittels der Einrichtungen 108a-108c zum Überwachen der Düngerausbringung können die Streugeräte 100a-100c Ausbringinformationen erfassen und aufzeichnen. Die dargestellten Ausbringvorgänge der Streugeräte 100a-100c erfolgen an unterschiedlichen Orten und zu unterschiedlichen Zeiten. Die dargestellten Streugeräte 100a-100c bringen die gleiche Düngersorte aus.

Die Streugeräte 100a-100c erfassen während des Ausbringvorgangs kontinuierlich die Eigenschaften ihres Streufächers mittels mehrerer optischer Sensoren oder mittels mehrerer Radarsensoren und zeichnen jeweils Informationen zu der tatsächlichen Querverteilung der Düngersorte während des Ausbringvorgangs auf.

Ferner erfassen die Streugeräte 100a-10c während des Ausbringvorgangs kontinuierlich das Gewicht ihres Vorratsbehälters für Streugut und die Öffnungsgröße ihrer Dosieröffnung, sodass kontinuierlich das Verhältnis zwischen dem Gewicht des Vorratsbehälters und der Öffnungsgröße der Dosieröffnung aufgezeichnet werden kann. Das Erfassen des Gewichts des Vorratsbehälters für Streugut erfolgt dabei mittels eines mit dem Vorratsbehälter für Streugut gekoppelten Wiegesystems.

Ferner umfassen die Streugeräte 100a-100c jeweils eine als Touchscreen ausgebildete Eingabeeinrichtung, über welche der Benutzer des jeweiligen Streugeräts 100a-100c Sorteninformationen, beispielsweise eine Sortenbezeichnung, zu der auszubringenden Düngersorte bereitstellen kann. Dabei wird dem Benutzer auf dem Touchscreen eine Liste von Sortenbezeichnungen angezeigt, aus welcher der Benutzer die auszubringende Düngersorte auswählen kann.

Insgesamt umfassen die von den Streugeräten erfassten und aufgezeichneten Ausbringinformationen also eine Sortenbezeichnung der Düngersorte, Informationen zu der beabsichtigten und der tatsächlichen Querverteilung der Düngersorte während des jeweiligen Ausbringvorgangs, Informationen zu der beabsichtigten und der tatsächlichen Längsverteilung der Düngersorte während des jeweiligen Ausbringvorgangs, Informationen zu der beabsichtigten und der tatsächlichen Ausbringmenge und/oder Ausbringrate der Düngersorte während des jeweiligen Ausbringvorgangs, Informationen zu mehreren veränderbaren Einstellparametern des jeweiligen Streugeräts 100a-100c während des jeweiligen Ausbringvorgangs und Informationen zu dem Modell und der Gerätekonfiguration des verwendeten Streugeräts 100a-100c während des jeweiligen Ausbringvorgangs. Die aufgezeichneten Einstellparameter umfassen die Scheibendrehzahl, den Aufgabepunkt und einen eine Durchflussmengeneinstellung repräsentierenden Kalibrierfaktor.

Die erfassten und aufgezeichneten Ausbringinformationen werden dann von den jeweiligen Streugeräten 100a-100c an die Auswerteeinrichtung 10 gesendet. Das Senden der Ausbringinformationen von den jeweiligen Streugeräten 100a-100c an die Auswerteeinrichtung 10 erfolgt kabellos über die Funkverbindungen 202a-202c.

Die Auswerteeinrichtung 10 empfängt über eine Empfangseinrichtung 12 die Ausbringinformationen zu den unterschiedlichen Ausbringvorgängen der Düngersorte von den Streugeräten 100a-100c und wertet die empfangenen Ausbringinformationen mittels der Berechnungseinrichtung 14 zum Erfassen von Eigenschaften der Düngersorte aus. Auf Grundlage der erfassten Eigenschaften der Düngersorte ermittelt die Auswerteeinrichtung 10 dann geeignete Einstellparametern für ein Streugerät zum Ausbringen der Düngersorte. Nachdem die geeigneten Einstellparameter ermittelt wurden, werden diese durch die Auswerteeinrichtung 10 mit Einstellparametern verglichen, welche zuvor im Rahmen von Streuversuchen unter Laborbedingungen für die Düngersorte ermittelt wurden. Die Einstellparameter umfassen dabei Angaben zu einer geeigneten Scheibendrehzahl, einem geeigneten Aufgabepunkt und einem geeigneten die Durchflussmengeneinstellung repräsentierenden Kalibrierfaktor. Durch die große Menge von ausgewerteten Ausbringinformationen werden Einstellparameter ermittelt, welche eine vergleichsweise präzise Umsetzung der beabsichtigten Querverteilung und eine vergleichsweise präzise Einhaltung der beabsichtigten Ausbringmenge und/oder Ausbringrate erlauben.

Wenn die ermittelten Einstellparameter über ein gewisses Maß von den Einstellparametern, welche zuvor im Rahmen von Streuversuchen unter Laborbedingungen für die Düngersorte ermittelt wurden, abweichen, werden die ermittelten Einstellparameter zum Ausbringen der Düngersorte bereitgestellt. Das Bereitstellen der ermittelten Einstellparameter erfolgt auf zwei unterschiedlichen Wegen.

Zum einen werden die ermittelten Einstellparameter zum Onlineabruf bereitgestellt. Der Onlineabruf der ermittelten Einstellparameter kann beispielsweise direkt durch andere Streugeräte 100a-100c erfolgen, wenn diese über eine entsprechende Abrufeinrichtung verfügen. Dies ist bei den Streugeräten 100a-100c der Fall. Die abgerufenen Einstellparameter werden durch die Sendeeinrichtung 16 der Auswerteeinrichtung 10 an die Streugeräte 100a-100c versendet. Nach dem Abrufen stellen die Streugeräte 100a-100c die abgerufenen Einstellparameter selbsttätig ein, sodass die Düngerausbringung mit einer noch höheren Präzision erfolgt.

Zum anderen werden die ermittelten Einstellparameter genutzt, um eine neue Streutabelle S für die Düngersorte zu erstellen, wobei aus der neuen Streutabelle S die ermittelten Einstellparameter zum Ausbringen der Düngersorte entnehmbar sind. Somit können auch Streugeräte 102 von der Ermittlung der neuen Einstellparameter profitieren, welche nicht über eine entsprechende Abrufeinrichtung für den Onlineabruf der Einstellparameter verfügen.

Das dargestellte von dem Fahrzeug 106 getragene Streugerät 102 stellt außerdem ein Streugerät 102 ohne sensorbasierte Einrichtungen zum Überwachen der Düngerausbringung dar. Durch die neu erstellte Streutabelle S, welche beispielweise eine digitale und auf einem mobilen Endgerät anzeigbare Streutabelle S sein kann, können die neuen Einstellparameter in Verbindung mit dem Streugerät 102 genutzt werden. Das Streugerät 102 profitiert in diesem Fall von der Sensorik der Streugeräte 100a-100c, ohne selbst entsprechende Einrichtungen aufweisen zu müssen.

### Bezugszeichen

- 10: Auswerteeinrichtung
- 12: Empfangseinrichtung
- 14: Berechnungseinrichtung
- 16: Sendeeinrichtung
- 100a-100c: Streugeräte bzw. Sender
- 102: Streugerät
- 104a-104c: Fahrzeuge
- 106: Fahrzeug
- 108a-108c: Einrichtungen zum Überwachen der Düngerausbringung
- 200: System
- 202a-202c: Funkverbindungen
- S: Streutabelle

## Patentansprüche

1. Verfahren zum Erfassen von Düngereigenschaften, **gekennzeichnet durch** die Schritte:
- Erfassen und/oder Aufzeichnen von Ausbringinformationen zu einer Mehrzahl von Ausbringvorgängen einer Düngersorte durch unterschiedliche Streugeräte (100a-100c);
- Senden der erfassten und/oder aufgezeichneten Ausbringinformationen von den jeweiligen Streugeräten (100a-100c) an Peine Auswerteeinrichtung (10);
- Empfangen der Ausbringinformationen zu einer Mehrzahl von unterschiedlichen Ausbringvorgängen einer Düngersorte von den unterschiedlichen Sendern (100a-100c) durch die Auswerteeinrichtung (10); und
- Auswerten der von den unterschiedlichen Sendern empfangenen Ausbringinformationen zum Erfassen von Eigenschaften der Düngersorte durch die Auswerteeinrichtung (10).

2. Verfahren nach Anspruch 1,
**dadurch gekennzeichnet, dass** die Ausbringinformationen zu den jeweiligen Ausbringvorgängen Sorteninformationen, insbesondere eine Sortenbezeichnung, zu der ausgebrachten Düngersorte umfassen.

3. Verfahren nach Anspruch 1 oder 2,
**dadurch gekennzeichnet, dass** die Ausbringinformationen zu den jeweiligen Ausbringvorgängen Informationen zu der beabsichtigten und/oder der tatsächlichen Querverteilung und/oder dem beabsichtigten und/oder tatsächlichen Streu- oder Flugverhalten der Düngersorte während des jeweiligen Ausbringvorgangs umfassen.

4. Verfahren nach einem der vorstehenden Ansprüche,
**dadurch gekennzeichnet, dass** die Ausbringinformationen zu den jeweiligen Ausbringvorgängen Informationen zu der beabsichtigten und/oder der tatsächlichen Längsverteilung und/oder der tatsächlichen Ausbringmenge und/oder Ausbringrate und/oder der beabsichtigten und/oder tatsächlichen geräteinternen Durchflussmenge der Düngersorte während des jeweiligen Ausbringvorgangs umfassen.

5. Verfahren nach einem der vorstehenden Ansprüche,
**dadurch gekennzeichnet, dass** die Ausbringinformationen zu den jeweiligen Ausbringvorgängen Informationen zu einem oder zu mehreren veränderbaren Einstellparametern des jeweiligen Streugeräts (100a-100c) während des jeweiligen Ausbringvorgangs umfassen.

6. Verfahren nach einem der vorstehenden Ansprüche,
**dadurch gekennzeichnet, dass** die Ausbringinformationen zu den jeweiligen Ausbringvorgängen Informationen zu dem Modell und/oder der Gerätekonfiguration des verwendeten Streugeräts (100a-100c) während des jeweiligen Ausbringvorgangs umfassen.

7. Verfahren nach einem der vorstehenden Ansprüche,
**gekennzeichnet durch** zumindest einen der folgenden Schritte:
- Ermitteln von einem oder mehreren geeigneten Einstellparametern für ein Streugerät (100a-100c) zum Ausbringen der Düngersorte auf Grundlage der erfassten Eigenschaften der Düngersorte durch die Auswerteeinrichtung (10);
- Vergleichen des einen oder der mehreren ermittelten geeigneten Einstellparameter für das Streugerät (100a-100c) zum Ausbringen der Düngersorte mit einem oder mehreren Einstellparametern, welche auf Grundlage der erfassten Eigenschaften der Düngersorte zu einem früheren Zeitpunkt durch die Auswerteeinrichtung (10) ermittelt wurden;
- Vergleichen des einen oder der mehreren ermittelten geeigneten Einstellparameter für das Streugerät (100a-100c) zum Ausbringen der Düngersorte mit einem oder mehreren Einstellparametern, welche zuvor im Rahmen von Streuversuchen, insbesondere unter Laborbedingungen, für die Düngersorte ermittelt wurden.

8. Verfahren nach Anspruch 7,
**gekennzeichnet durch** zumindest einen der folgenden Schritte:
- Bereitstellen der ermittelten geeigneten Einstellparameter für das Streugerät (100a-100c, 102) zum Ausbringen der Düngersorte.

9. Verfahren nach Anspruch 8,
**dadurch gekennzeichnet, dass** das Breitstellen der ermittelten geeigneten Einstellparameter für das Streugerät (100a-100c, 102) zum Ausbringen der Düngersorte zumindest einen der folgenden Schritte umfasst:
- Erstellen einer neuen Streutabelle (S) für die Düngersorte, wobei aus der neuen Streutabelle (S) die ermittelten geeigneten Einstellparameter für das Streugerät (100a-100c, 102) zum Ausbringen der Düngersorte entnehmbar sind;
- Aktualisieren einer Streutabelle (S) für die Düngersorte, wobei aus der aktualisierten Streutabelle (S) die ermittelten geeigneten Einstellparameter für das Streugerät (100a-100c, 102) zum Ausbringen der Düngersorte entnehmbar sind;
- Bereitstellen der ermittelten geeigneten Einstellparameter für das Streugerät (100a-100c, 102) zum Ausbringen der Düngersorte zum Onlineabruf.

10. Verfahren nach einem der vorstehenden Ansprüche,
**dadurch gekennzeichnet, dass** das Erfassen und/oder Aufzeichnen von Ausbringinformationen zu den jeweiligen Ausbringvorgängen der Düngersorte zumindest den folgenden Schritt umfasst:
- Erfassen, insbesondere kontinuierliches Erfassen, von Eigenschaften zumindest eines Streufächers des jeweiligen Streugeräts (100a-100c) während des Ausbringvorgangs der Düngersorte.

11. Verfahren zum Ausbringen von Dünger, mit den Schritten:
- selbsttätiges Einstellen von einem oder mehreren geeigneten Einstellparametern an einem Streugerät (100a-100c) zum Ausbringen einer Düngersorte durch das Streugerät (100a-100c); und
- Ausbringen der Düngersorte auf eine landwirtschaftliche Nutzfläche;
**gekennzeichnet durch** den Schritt:
- Abrufen des einen oder der mehreren geeigneten Einstellparameter für das Streugerät (100a-100c) zum Ausbringen der Düngersorte, insbesondere durch einen Onlineabruf, wobei der eine oder die mehreren geeigneten Einstellparameter für das Streugerät (100a-100c) zum Ausbringen der Düngersorte unter Anwendung des Verfahren zum Erfassen von Düngereigenschaften nach einem der vorstehenden Ansprüche ermittelt wurden.

12. Auswerteeinrichtung (10) zum Erfassen von Düngereigenschaften, **gekennzeichnet durch**:
- eine Empfangseinrichtung (12), welche dazu eingerichtet ist, Ausbringinformationen zu einer Mehrzahl von unterschiedlichen Ausbringvorgängen einer Düngersorte von unterschiedlichen als Streugeräte ausgebildeten Sendern (100a-100c) zu empfangen; und
- eine Berechnungseinrichtung (14), welche dazu eingerichtet ist, die von den unterschiedlichen als Streugeräte ausgebildeten Sendern (100a-100c) empfangenen Ausbringinformationen zum Erfassen von Eigenschaften der Düngersorte auszuwerten.

13. Auswerteeinrichtung (10) nach Anspruch 12,
**dadurch gekennzeichnet, dass** die Berechnungseinrichtung (14) dazu eingerichtet ist, einen oder mehrere geeignete Einstellparameter für ein Streugerät (100a-100c) zum Ausbringen der Düngersorte auf Grundlage der erfassten Eigenschaften der Düngersorte zu ermitteln.

14. Auswerteeinrichtung (10) nach Anspruch 12 oder 13,
**dadurch gekennzeichnet, dass** die Auswerteeinrichtung (10) dazu eingerichtet ist, in einem Verfahren zum Erfassen von Düngereigenschaften nach einem der Ansprüche 1 bis 12 verwendet zu werden.

## Claims

1. Method for capturing fertilizer properties, **characterized by** the steps of:
- capturing and/or recording discharge information relating to a plurality of operations of discharging a type of fertilizer by means of different spreaders (100a-100c);
- transmitting the captured and/or recorded discharge information from the respective spreaders (100a-100c) to an evaluation device (10);
- receiving the discharge information relating to a plurality of different operations of discharging a type of fertilizer from the different transmitters (100a-100c) by means of the evaluation device (10); and
- evaluating the discharge information received from the different transmitters in order to capture properties of the type of fertilizer by means of the evaluation device (10).

2. Method according to Claim 1,
**characterized in that** the discharge information relating to the respective discharge operations comprises type information, in particular a type designation, relating to the discharged type of fertilizer.

3. Method according to Claim 1 or 2,
**characterized in that** the discharge information relating to the respective discharge operations comprises information relating to the intended and/or actual lateral distribution and/or the intended and/or actual spreading or flight behaviour of the type of fertilizer during the respective discharge operation.

4. Method according to one of the preceding claims, **characterized in that** the discharge information relating to the respective discharge operations comprises information relating to the intended and/or actual longitudinal distribution and/or the actual discharge quantity and/or discharge rate and/or the intended and/or actual device-internal flow rate of the type of fertilizer during the respective discharge operation.

5. Method according to one of the preceding claims, **characterized in that** the discharge information relating to the respective discharge operations comprises information relating to one or more variable setting parameters of the respective spreader (100a-100c) during the respective discharge operation.

6. Method according to one of the preceding claims, **characterized in that** the discharge information relating to the respective discharge operations comprises information relating to the model and/or the device configuration of the spreader (100a-100c) used during the respective discharge operation.

7. Method according to one of the preceding claims, **characterized by** at least one of the following steps of:
- determining one or more suitable setting parameters for a spreader (100a-100c) for discharging the type of fertilizer on the basis of the captured properties of the type of fertilizer by means of the evaluation device (10);
- comparing the one or more determined suitable setting parameters for the spreader (100a-100c) for discharging the type of fertilizer with one or more setting parameters which were determined by the evaluation device (10) at an earlier time on the basis of the captured properties of the type of fertilizer;
- comparing the one or more determined suitable setting parameters for the spreader (100a-100c) for discharging the type of fertilizer with one or more setting parameters which were previously determined as part of spreading experiments, in particular under laboratory conditions, for the type of fertilizer.

8. Method according to Claim 7,
**characterized by** at least one of the following steps of:
- providing the determined suitable setting parameters for the spreader (100a-100c, 102) for discharging the type of fertilizer.

9. Method according to Claim 8,
**characterized in that** the provision of the determined suitable setting parameters for the spreader (100a-100c, 102) for discharging the type of fertilizer comprises at least one of the following steps of:
- creating a new spreading table (S) for the type of fertilizer, wherein the determined suitable setting parameters for the spreader (100a-100c, 102) for discharging the type of fertilizer can be taken from the new spreading table (S);
- updating a spreading table (S) for the type of fertilizer, wherein the determined suitable setting parameters for the spreader (100a-100c, 102) for discharging the type of fertilizer can be taken from the updated spreading table (S);
- providing the determined suitable setting parameters for the spreader (100a-100c, 102) for discharging the type of fertilizer for online retrieval.

10. Method according to one of the preceding claims, **characterized in that** the capture and/or recording of discharge information relating to the respective operations of discharging the type of fertilizer comprise(s) at least the following step of:
- capturing, in particular continuously capturing, properties of at least one spread fan of the respective spreader (100a-100c) during the operation of discharging the type of fertilizer.

11. Method for discharging fertilizer, having the steps of:
- automatically setting one or more suitable setting parameters on a spreader (100a-100c) for discharging a type of fertilizer by means of the spreader (100a-100c); and
- discharging the type of fertilizer to an agricultural area;
**characterized by** the step of:
- retrieving the one or more suitable setting parameters for the spreader (100a-100c) for discharging the type of fertilizer, in particular by means of online retrieval, wherein the one or more suitable setting parameters for the spreader (100a-100c) for discharging the type of fertilizer were determined using the method for capturing fertilizer properties according to one of the preceding claims.

12. Evaluation device (10) for capturing fertilizer properties,
**characterized by**:
- a receiving device (12) which is configured to receive discharge information relating to a plurality of different operations of discharging a type of fertilizer from different transmitters (100a-100c) in the form of spreaders; and
- a calculation device (14) which is configured to evaluate the discharge information received from the different transmitters (100a-100c) in the form of spreaders in order to capture properties of the type of fertilizer.

13. Evaluation device (10) according to Claim 12, **characterized in that** the calculation device (14) is configured to determine one or more suitable setting parameters for a spreader (100a-100c) for discharging the type of fertilizer on the basis of the captured properties of the type of fertilizer.

14. Evaluation device (10) according to Claim 12 or 13, **characterized in that** the evaluation device (10) is configured to be used in a method for capturing fertilizer properties according to one of Claims 1 to 12.

## Revendications

1. Procédé de détection de propriétés d'engrais, ledit procédé étant **caractérisé par** les étapes suivantes :
- détecter et/ou acquérir des informations d'épandage relatives à une pluralité de processus d'épandage d'un type d'engrais effectués par différents appareils de dispersion (100a-100c) ;
- envoyer les informations d'épandage détectées et/ou acquises des appareils de dispersion respectifs (100a-100c) à un dispositif d'évaluation (10) ;
- recevoir des différents émetteurs (100a-100c), par le biais du dispositif d'évaluation (10), les informations d'épandage relatives à une pluralité de processus d'épandage différents d'un type d'engrais ; et
- évaluer par le biais du dispositif d'évaluation (10) les informations d'épandage reçues des différents émetteurs afin de détecter des propriétés du type d'engrais.

2. Procédé selon la revendication 1,
**caractérisé en ce que** les informations d'épandage relatives aux processus d'épandage respectifs comprennent des informations de type, en particulier une désignation de type, relatives au type d'engrais qui a été épandu.

3. Procédé selon la revendication 1 ou 2,
**caractérisé en ce que** les informations d'épandage relatives aux processus d'épandage respectifs comprennent des informations relatives à la distribution latérale prévue et/ou réelle et/ou au comportement de diffusion ou de vol prévu et/ou réel du type d'engrais pendant le processus d'épandage respectif.

4. Procédé selon l'une des revendications précédentes,
**caractérisé en ce que** les informations d'épandage relatives aux processus d'épandage respectifs comprennent des informations relatives à la distribution longitudinale prévue et/ou réelle et/ou à la quantité d'épandage réelle et/ou au volume d'épandage réel et/ou au débit, interne à l'appareil, prévu et/ou réel du type d'engrais pendant le processus d'épandage respectif.

5. Procédé selon l'une des revendications précédentes,
**caractérisé en ce que** les informations d'épandage relatives aux processus d'épandage respectifs comprennent des informations relatives à un ou plusieurs paramètres de réglage modifiables du dispositif de diffusion respectif (100a-100c) pendant le processus d'épandage respectif.

6. Procédé selon l'une des revendications précédentes,
**caractérisé en ce que** les informations d'épandage relatives aux processus d'épandage respectifs comprennent des informations relatives au modèle et/ou à la configuration de l'appareil de diffusion (100a-100c) utilisé pendant le processus d'épandage respectif.

7. Procédé selon l'une des revendications précédentes,
**caractérisé par** au moins une des étapes suivantes :
- déterminer par le biais du dispositif d'évaluation (10) un ou plusieurs paramètres de réglage appropriés d'un appareil de diffusion (100a-100c) afin d'épandre le type d'engrais sur la base des propriétés détectées du type d'engrais ;
- comparer le ou les paramètres de réglage appropriés déterminés de l'appareil de diffusion (100a-100c) afin d'épandre le type d'engrais avec un ou plusieurs paramètres de réglage qui ont été déterminés à un moment antérieur par le dispositif d'évaluation (10) sur la base des propriétés détectées du type d'engrais ;
- comparer le ou les paramètres de réglage appropriés déterminés de l'appareil de diffusion (100a-100c) afin d'épandre le type d'engrais avec un ou plusieurs paramètres de réglage qui ont été préalablement déterminés pour le type d'engrais dans le cadre d'essais de diffusion, notamment dans des conditions de laboratoire.

8. Procédé selon la revendication 7,
**caractérisé par** au moins une des étapes suivantes :
- fournir les paramètres de réglage appropriés déterminés de l'appareil de diffusion (100a-100c, 102) afin d'épandre le type d'engrais.

9. Procédé selon la revendication 8,
**caractérisé en ce que** la fourniture des paramètres de réglage appropriés déterminés de l'appareil de diffusion (100a-100c, 102) afin d'épandre le type d'engrais comprend au moins une des étapes suivantes :
- créer une nouvelle table de diffusion (S) pour le type d'engrais, les paramètres de réglage appropriés déterminés de l'appareil de diffusion (100a-100c, 102) afin d'épandre le type d'engrais pouvant être extraits de la nouvelle table d'épandage (S) ;
- actualiser une table d'épandage (S) pour le type d'engrais, les paramètres de réglage appropriés déterminés de l'appareil de diffusion (100a-100c, 102) afin d'épandre le type d'engrais pouvant être extraits de la table d'épandage actualisée (S) ;
- fournir les paramètres de réglage appropriés déterminés de l'appareil de diffusion (100a-100c, 102) afin d'épandre le type d'engrais en vue d'une récupération en ligne.

10. Procédé selon l'une des revendications précédentes,
**caractérisé en ce que** la détection et/ou l'acquisition d'informations d'épandage relatives aux processus d'épandage respectifs du type d'engrais comprennent au moins l'étape suivante :
- détecter, en particulier détecter en continu, des propriétés d'au moins un diffuseur en éventail de l'appareil de diffusion respectif (100a-100c) pendant le processus d'épandage.

11. Procédé d'épandage d'engrais, ledit procédé comprenant les étapes suivantes :
- régler automatiquement un ou plusieurs paramètres de réglage appropriés d'un appareil de diffusion (100a-100c) afin d'épandre un type d'engrais par le biais de l'appareil de diffusion (100a-100c) ; et
- épandre le type d'engrais sur une surface utile agricole ;
**caractérisé par** l'étape suivante :
- récupérer le ou les paramètres de réglage appropriés de l'appareil de diffusion (100a-100c) afin d'épandre le type d'engrais, notamment par récupération en ligne, le ou les paramètres de réglage appropriés de l'appareil de diffusion (100a-100c) afin d'épandre le type d'engrais ayant été déterminés à l'aide du procédé de détection de propriétés d'engrais selon l'une des revendications précédentes.

12. Dispositif d'évaluation (10) destiné à détecter des propriétés d'engrais,
**caractérisé par** :
- un dispositif de réception (12) qui est conçu pour recevoir de différents émetteurs (100a-100c), conçus comme des appareils de diffusion, des informations d'épandage relatives à une pluralité de processus d'épandage différents d'un type d'engrais ; et
- un dispositif de calcul (14) qui est conçu pour évaluer les informations d'épandage reçues des différents émetteurs (100a-100c) conçus comme des appareils de diffusion afin de détecter des propriétés du type d'engrais.

13. Dispositif d'évaluation (10) selon la revendication 12,
**caractérisé en ce que** le dispositif de calcul (14) est conçu pour déterminer un ou plusieurs paramètres de réglage appropriés d'un appareil de diffusion (100a-100c) afin d'épandre le type d'engrais sur la base des propriétés détectées du type d'engrais.

14. Dispositif d'évaluation (10) selon la revendication 12 ou 13,
**caractérisé en ce que** le dispositif d'évaluation (10) est conçu pour être utilisé dans un procédé de détection de propriétés d'engrais selon l'une des revendications 1 à 12.
